## Europäisches Patentamt

## European Patent Office

## Office européen des brevets

(11) Veröffentlichungsnummer: **0 211 052**
**B1**

(19)

(12) # EUROPÄISCHE PATENTSCHRIFT

(45) Veröffentlichungstag der Patentschrifft:
21.03.90

(21) Anmeldenummer: **86901034.8**

(22) Anmeldetag: **20.01.86**

(86) Internationale Anmeldenummer:
**PCT/DE 86/00016**

(87) Internationale Veröffentlichungsnummer:
**WO 86/04278 (31.07.86 Gazette 86/17)**

(51) Int. Cl.⁵: **B 23 D 43/04, B 23 D 37/00**

(54) RÄUMNADEL.

(30) Priorität: 22.01.85 DE 3501978
22.03.85 DE 3510486
04.04.85 DE 3512291
04.04.85 DE 3512304

(43) Veröffentlichungstag der Anmeldung:
25.02.87 Patentblatt 87/09

(45) Bekanntmachung des Hinweises auf die Patenterteilung:
21.03.90 Patentblatt 90/12

(84) Bennante Vertragsstaaten:
AT BE CH DE FR GB IT LI LU NL SE

(56) Entgegenhaltungen:
GB-A-438 242
US-A-3 656 220

(73) Patentinhaber: **Hertel Aktiengesellschaft Werkzeuge + Hartstoffe**
**Wehlauer Str. 71-73**
**D-8510 Fürth (DE)**

(72) Erfinder: **HERTEL, Günther**
**Mörikestr. 24**
**D-8500 Nürnberg 20 (DE)**
Erfinder: **HERTEL, Karl, Gustav**
**Knelppstr. 12**
**D-8500 Nürnberg 20 (DE)**

(74) Vertreter: **Tergau, Enno**
**Hefnersplatz 3 Postfach 11 93 47**
**D-8500 Nürnberg 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

EP 0 211 052 B1

## Beschreibung

Die Erfindung betrifft eine Räumnadel für die Oberflächenbearbeitung von Werkstückrundzapfen mit den im Oberbegriff des Anspruches 1 aufgeführten Merkmalen.

Aus GB-A-438 242 ist eine Räumnadel für die Oberflächenbearbeitung von Rundzapfen an Kurbelwellen bekannt, deren Schneiden zur Herstellung einer Schleppschnitteigenschaft mit der Räumnadel-längsachse einen spitzen Winkel bilden. Die Schneiden dieser Räumnadel weisen eine im wesentlichen gleichbleibende Schneidengeometrie und -ausrichtung über die gesamte Räumnadellänge auf. Derartige Räumnadeln eignen sich nicht für eine moderne Fertigung mit entsprechend hohen Schnittgeschwindigkeiten bzw. Zerspanungsleistungen.

Der Erfindung liegt die Aufgabe zugrunde, eine Räumnadel der eingangs genannten Art so auszugestalten, daß sie für eine Massenfertigung mit hohen Präzisionsanforderungen geeignet ist. Diese Aufgabe wird durch das Kennzeichnungsmerkmal des Anspruches 1 gelöst. Weitere bevorzugte Ausführungsformen dieser Räumnadel sind Gegenstand der Unteransprüche. Auf die Vorteile der in den Unteransprüchen aufgeführten Merkmale wird in der Figurenbeschreibung im einzelnen näher eingegangen.

Beim Drehräumen besteht weiterhin das Problem, daß eine Schneide der Räumnadel mindestens über eine Umdrehung des Werkstückes mit diesem in zerspanendem Eingriff sein muß. Dies bedingt eine gewisse Mindestspanlänge, die normalerweise nicht unterschritten werden kann. Hierbei wird davon ausgegangen, daß die Räumnadel mit ihren Schneiden im Schleppschnitt steht. Dies bedeutet, daß die Späne nicht rechtwinklig zu den Schneiden ablaufen, sondern der Zerspanungsbereich auf der Schneide während des Zerspanungsvorganges vom inneren, im Bereich der Mittellängsachse angeordneten Ende einer Schneide zu deren äußerem Ende wandert, also ausgehend von der Mitte der zu räumenden Nut zu deren Außenbereich. Durch dieses Wandern des Zerspanungsbereiches und durch das nicht rechtwinklig zur Schneide erfolgende Ablaufen des Spanes ist die Anordnung herkömmlicher Spanbrechernuten, Spanbrechervorsprünge od.dgl. an bzw. auf den Schneidkörperspanflächen wirkungslos. Nach einer bevorzugten Ausgestaltung der Erfindung wird die Räumnadel gemäß Anspruch 1 so ausgebildet, daß der durch jede von der Mittellängsachse bis zur Seitenkante der Räumnadel verlaufende Schneide gebildete Span in vergleichsweise kurzen Abständen wirksam gebrochen und dadurch die Spanabfuhr auch bei hinsichtlich der Spanbildung problematischen Werkstück-Werkstoffen begünstigt wird. (Siehe Anspruch 20). Dadurch läuft der Span einer im Schleppschnitt stehenden Schneide ausgehend von der Mittellängsachse nur bis zu einer Unterbrechung und bricht dort ab. Die Fortsetzung der Schneide zwischen Unterbrechung und Außenseite der Räumnadel oder weiterer Unterbrechung bildet einen neuen, separaten Span.

In der Ausführung gemäß Anspruch 29 werden die Unterbrechungen durch die Lücken zwischen zwei gestaffelt hintereinander positionierten Schneidkörpern gebildet. Diese Bauform hat den weiteren Vorteil, daß auch größere Nutbreiten und diese wiederum in praktisch stufenloser Breitanabmessung mit Schneidkörpern fixer Abmessungen herstellbar sind. Insbesondere können dies aus Gründen der Kostenersparnis Iso- und Normplatten sein. Auch stellt es schon eine Ersparnis dar, wenn die Schneidkörper aus Iso- bzw. Normplatten in ihre endgültige Form geschliffen sind. Die Einstellung der wirksamen Breite der beiden nebeneinander auf der Räumnadel beidseitig von deren Mittellängsachse angeordneten Schneidkörperschneiden erfolgt dann lediglich durch entsprechende Plattenpositionierung auf dem Räumnadelkörper.

Bei der Räumnadel nach Anspruch 1 erfolgt im Anschnittbereich (dort Teilbereich A genannt) die Bearbeitung lediglich des Schulteraufmaßes mit Schulterschneidplatten. Erst im zweiten Teilbereich (dort Teilbereich B genannt) des Räumnadeleingriffes ist die Räumnadel für die Bearbeitung des Zapfenaufmaßes mit Stirnschneidplatten bestückt.

Die Erfindung geht von der Prämisse aus, daß das im Drehräumvorgang zu bearbeitende Werkstück bereits eine Vorformung einer auszuformenden Ringnut aufweist, wie diese beispielsweise bei im Gesenk geschlagenen oder gegossenen Kurbelwellen vorliegt. Bei Räumnadeln zur Bearbeitung derartiger Werkstücke kann es nachteilig sein, wenn im Anschnittbereich (Teilbereich A) lediglich eine Bearbeitung des Schulteraufmaßes mit entsprechend geringerem Zerspanungsvolumen stattfindet, während die Bearbeitung des Zapfenaufmaßes erst im zweiten Teilbereich (Teilbereich B) mit entsprechend hoher Zerspanungsleistung beginnt. Die erst hinter dem Anschnittbereich beginnende, starke Zerspanung (Schruppen) des Zapfenaufmaßes führt zu einer erhöhten Schwingungs-Belastung der Räumnadel in einem für die Endbearbeitung (finish) vorgesehenen, hinteren Teilbereich (Teil D). Dies kann nachteilige Schwingungsbeeinflussungen gerade der für die saubere Oberflächenbearbeitung wichtigen Finish-Zone der Räumnadel zur Folge haben.

Diese schädliche, auf den Finish-Bereich einwirkende Schwingungsbeeinflussung soll durch die Weiterbildungsmerkmale des Anspruchs 35 möglichst unterdrückt werden. Dadurch wird ein größerer Anteil der Schrupp-Bearbeitung und des Zerspanungsvolumens in den Anschnittbereich der Räumnadel verlagert. Beispielsweise wird etwa noch vorhandene Guß- oder Schmiedehaut allseitig bereits im Anschnittbereich beseitigt. Für die End- bzw. Feinbearbeitung, die weniger Schwingungen erzeugt, steht dann mehr Räumnadellänge zur Verfügung. Das Zerspanungs-Restvolumen wird auf eine größere Räumnadellänge verteilt. Daraus resultiert eine Verbesserung der Oberflächenqualität am Werkstück. Weiterhin kann durch die Erfindung im Schruppbereich mit normähnlichen Platten gearbeitet werden. Dies hat den Vorteil, daß gerade im beanspruchungsmäßig besonders belasteten und dadurch verschleißintensiven Räumnadelbereich mit billigen Schneidkörpern gearbeitet werden kann.

Der bezogen auf die Mittellängsachse der Räumnadel mittige Schneidkörper kann sich mit seinen beiden Schneiden über die gesamte Nutbreite erstrecken, was insbesondere im Schlichtbereich der Räumnadel der Fall ist. Eine andere, im Schruppbereich der Räumnadel bevorzugte Ausführungsform dieses Schneidkörpers erstreckt sich indessen nicht über die gesamte Räumnadelbreite. In solchen Fällen hat der Schneidkörper die Funktion eines Vorschneiders, dem - bezogen auf die Vorschubrichtunghinter sich in die Seitenbereiche der Räumnadel hineinreichende Schneidkörper in gestaffelter Anordnung folgen. Die bugartige, in der Vertikalebene der RäumnadelMittellängsachse liegende Stoßkante zwischen den beiderseits der Mittellängsachse angeordneten Spanflächen dieses Schneidkörpers ist im Bereich der Schneidspitze besonders hohen Verschleißangriffen ausgesetzt, so daß in diesem Bereich eine exakte Spanteilung nicht gewährleistet werden kann. Dies führt dazu, daß die beiden nach dem Anschnitt durch die im Schleppschnitt stehenden Schneiden gebildeten Späne im Anschnitt des Schneidkörpers keine eindeutige Seitenorientierung haben. Die Spantrennung kann von außen unbeeinflußbar sowohl auf der einen als auch auf der anderen Seite der Mittellängsachse der Räumnadel und damit der bugartigen Stoßkante zwischen den beiderseits der Mittellängsachse angeordneten Spanflächen des Schneidkörpers erfolgen. Dadurch entsteht die Gefahr, daß der ablaufende Span sich am Sattel zwischen beiderseits der Mittellängsachse angeordneten Spanablaufkammern verhakt und ein Hindernis für die nachfolgenden Späne bildet.

Die Weiterbildung gemäß Anspruch 43 soll schließlich dieses Festsetzen ablaufender Späne im Bereich des mittigen Schneidkörpers vermeiden und dadurch das Spanablaufverhalten verbessern. Durch die Erfindung ist eine zuverlässige Spanzertrennung gewährleistet, die sehr widerstandskräftig und damit verschleißresistent ist.

Die Ausführungsform nach Anspruch 46 begünstigt die seitliche Spanabführung. Bei der Ausführung gemäß Anspruch 47 überdeckt der Trennkörper den gesamten Einfallbereich von Spänen. Durch das Weiterbildungsmerkmal des Anspruches 48 ist es möglich, von vornherein die bugartige Stoßkante zwischen den Schneidkörperspanflächen so auszuformen, daß sie besonders verschleißresistent ist. Die damit verbundene Unsicherheit des Ortes der Spanteilung bleibt durch diese zusätzliche Ausbildung ohne negative Folgen für den Spanablauf.

Die Ausführungsform gemäß Anspruch 49 ermöglicht eine einfache Halterung des Trennkörpers innerhalb der Räumnadel. Durch das Kennzeichnungsmerkmal des Anspruch ermöglicht sowohl eine sichere Fixierung als auch eine Ausrichtung des Trennkörpergrates in Räumnadellängsrichtung.

Anspruch 51 erleichtert eine Lösung des Trennkörpers vom Räumnadelschaft zu Zwecken eines Austausches.

Die Erfindung wird anhand von in den Figuren dargestellten Ausführungsbeispielen näher erläutert. Es zeigen:

- Fig. 1 eine Seitenansicht der kompletten Räumnadel,
- Fig. 2 eine Draufsicht auf die Räumnadel gemäß Pfeil II in Fig. 1,
- Fig. 2a eine perspektivische Ansicht der Räumnadel,
- Fig. 3 eine Draufsicht auf das mit "Teil A" bezeichnete Vorderteil der Räumnadel entsprechend Pfeil III in Fig. 1,
- Fig. 4 eine Draufsicht auf den mit "Teil B" bezeichneten Teil der Räumnadel entsprechend Pfeil IV in Fig. 1,

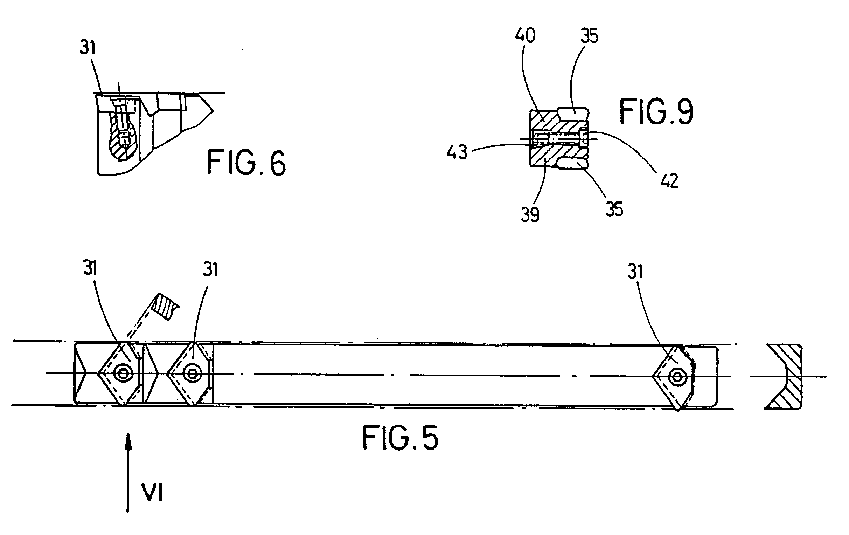

- Fig. 5 eine Draufsicht auf den mit "Teil C" bezeichneten Teil der Räumnadel entsprechend Pfeil V in Fig. 1,
- Fig. 6 eine Detail-Seitenansicht entsprechend Pfeil VI in Fig. 5,

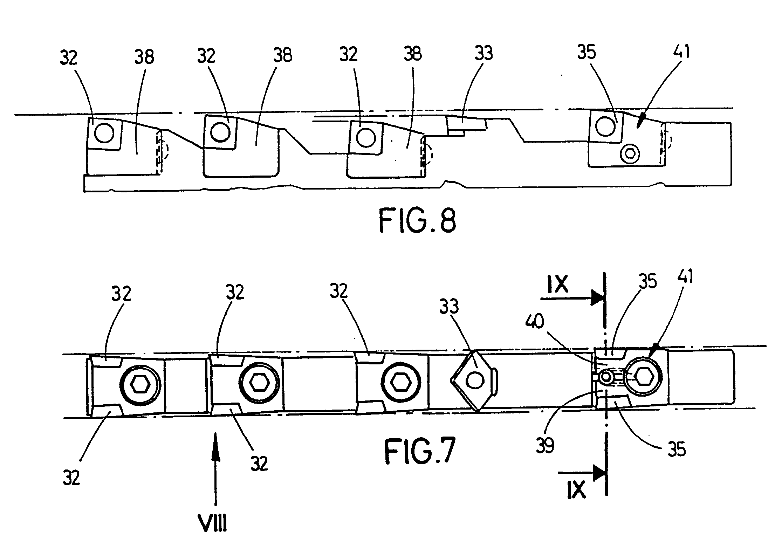

- Fig. 7 eine Draufsicht auf das in Fig. 1 mit "Teil D" bezeichnete Finish-Teil der Räumnadel,
- Fig. 8 eine Seitenansicht des Räumnadelteiles D gemäß Pfeil VIII in Fig. 7,
- Fig. 9 einen Schnitt entsprechend der Linie IX - IX in Fig. 7,
- Fig. 10 eine vergrößerte Draufsicht auf ein Schneidkörperpaar des Anschnitteiles A der Räumnadel entsprechend Pfeil X in Fig. 1,
- Fig. 11 - 13 unterschiedliche Seitenansichten der Schneidkörper des Anschnitteiles A, aus denen die jeweiligen Span- und Neigungswinkel der Schneidkörper in ihrer Schnittstellung ersichtlich sind,
- Fig. 14 eine schematische Seitenansicht einer Kurbelwelle in Vorschubrichtung der Räumnadel mit in Eingriffstellung befindlicher Räumnadel.
- Fig. 15 - 17 eine Draufsicht auf die Spanfläche verschiedener Schneidkörperformen wobei die Schneidkörper sich über die gesamte Räumnadelbreite erstrecken,
- Fig. 18 u. 19 die Draufsicht auf die Spanflächenseite zweier unterschidlicher Räumnadel-Ausführungsformen,
- Fig. 18a u. 19a Detailseitenansichten der Schneidkörper in Fig. 18 und 19,
- Fig. 20 - 22 eine Draufsicht auf die Spanflächen von durch eine ungerade Mehrzahl von Schneidkörpern gebildeten, nebeneinander beidseitig der Mittellängsachse bzw. Mittellängsebene angeordneten Räumnadelschneiden,
- Fig. 23 - 25 schematische Seitenansichten entsprechend den Pfeilrichtungen IX - XI in Fig. 20 - 22,

- Fig. 26 eine Draufsicht auf die Freiflächenseite eines Räumnadelabschnittes,
- Fig. 27 eine Seitenansicht des Räumnadelabschnittes entsprechend Pfeil II in Fig. 26,
- Fig. 28 einen Vertikalschnitt durch die Räumnadel entsprechend der Linie III - III in Fig. 26 in Eingriffsstellung an einem Werkstück (Kurbelzapfen einer Kurbelwelle),
- Fig. 29 einen Vertikalschnitt entsprechend der Linie IV - IV in Fig. 28 durch den Kurbelzapfen,
- Fig. 30 eine Draufsicht auf eine modifizierte Ausführungsform eines Räumnadelabschnittes analog Fig. 26,
- Fig. 31 eine Seitenansicht entsprechend Pfeil VI in Fig. 30,
- Fig. 32 eine Schnittdarstellung entsprechend der Linie VII - VII in Fig. 30 analog Fig. 28 mit in Eingriffstellung am Kurbelzapfen befindlicher Räumnadel,
- Fig. 33 eine Draufsicht analog Fig. 26 und Fig. 30 auf eine modifizierte Ausführungsform einer Räumnadel,
- Fig. 34 eine Ansicht entsprechend der Linie IX - IX in Fig. 33 mit in Eingriffstellung am Werkstück stehender Räumnadel,
- Fig. 35 eine Seitenansicht entsprechend Pfeil 10 in fig.33,

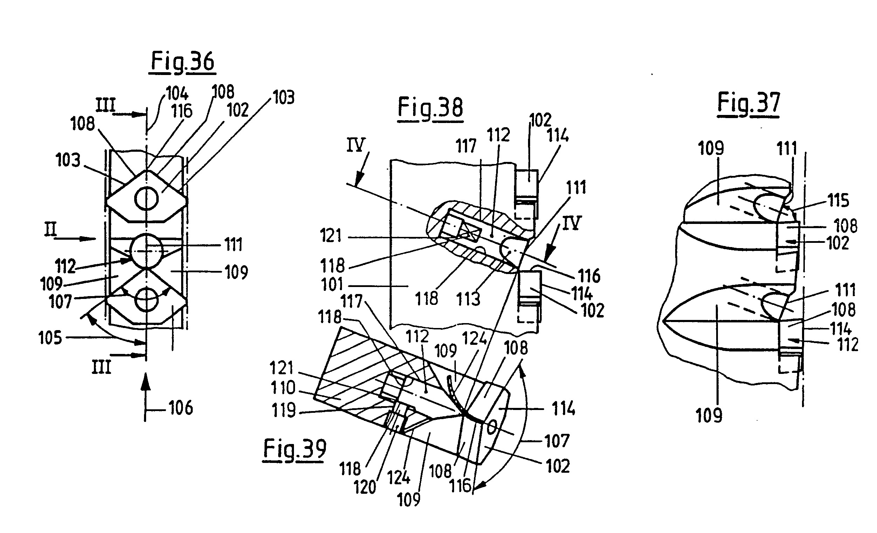

- Fig. 36 eine Draufsicht auf die Freiflächenseite eines Ausschnittes der Räumnadel,
- Fig. 37 eine Seitenansicht des Ausschnittes entsprechend Pfeil II in Fig. 36 mit einer Darstellung der die Räumnadel flankierenden Spannuten,
- Fig. 38 eine Seitenansicht analog Fig. 37 mit einer Teilschnitt-Darstellung des Trennkörpers entsprechend der Linie III - III in Fig. 36,
- Fig. 39 einen Schnitt entsprechend der Linie IV - IV in Fig. 38.

Die Räumnadel 1 dient zur Oberflächenbearbeitung sowohl der Hubzapfen 2 als auch der Führungszapfen 3 beispielsweise einer Kurbelwelle. Dabei wird die Kurbelwelle um die Achse des jeweils zu bearbeitenden Lagerzapfens in Rotation versetzt. Die Räumnadelschneiden sind Teile von am Räumnadelkörper auswechselbar befestigten Schneidkörpern aus einem harten Schneidwerkstoff, beispielsweise Hartmetall.

Die Räumnadel ist über ihre gesamte Länge in vier Teile A - D unterteilt, von denen Teil A und B den Schruppbereich und Teil C und D den Schlichtbereich bilden.

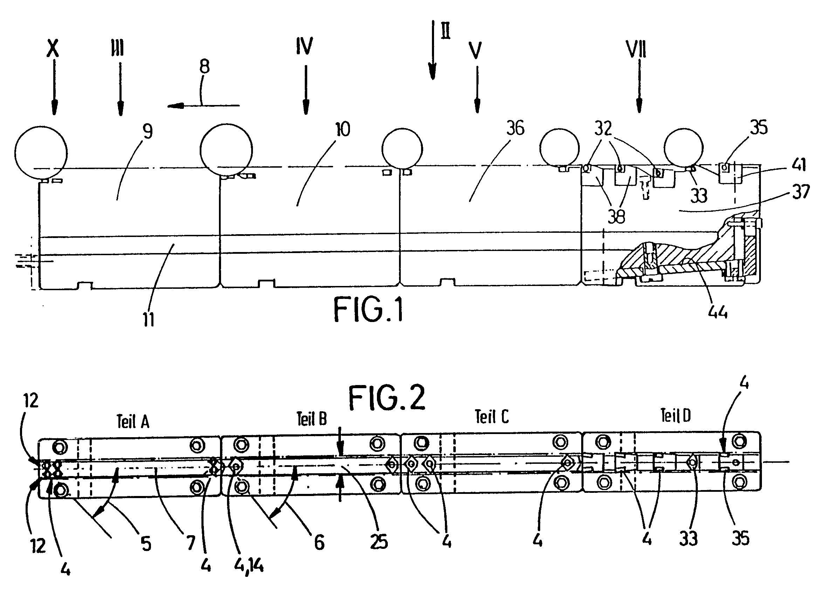

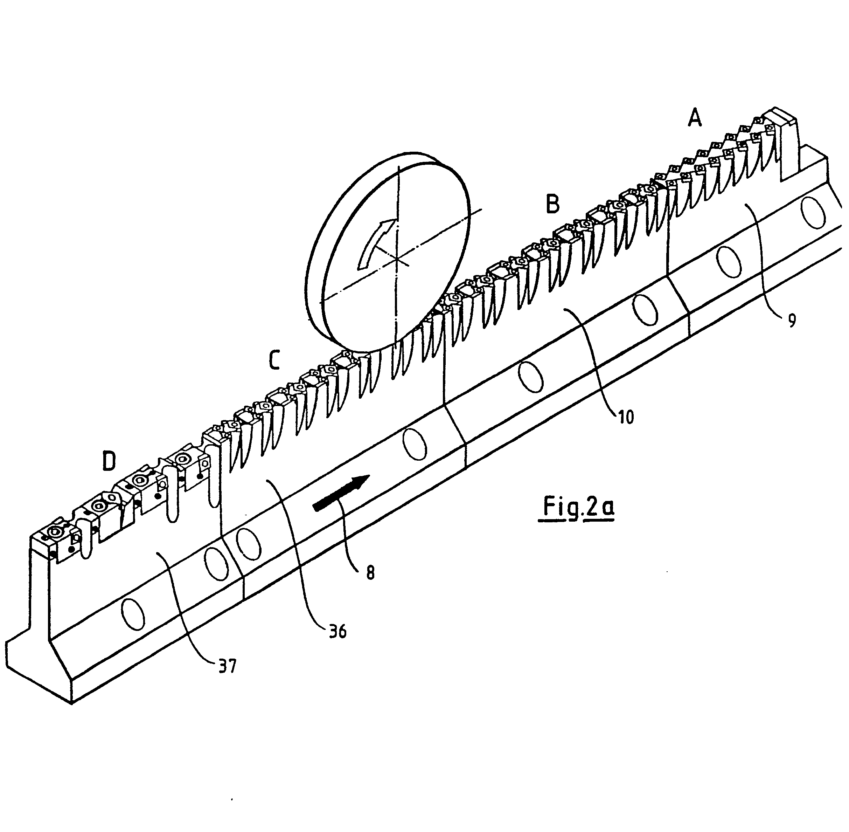

Im Schruppbereich A und B der Räumnadel bilden die in Eingriff mit dem Werkstück bringbaren Schneiden zum Schleppschnitt einen spitzen Winkel 5 bzw. 6 (Fig. 2) mit der Längsachse 7 der Räumnadel (Fig. 2). Dieser spitze Winkel beträgt zwischen 30° und 60°. Die Vorschubrichtung der Räumnadel beim Räum-Vorgang ist mit 8 bezeichnet. Die im Schruppbereich A und B angeordneten Schneidkörper 4 sind zu mehreren auf einem Trägerteil 9 bzw. 10 befestigt welches jeweils als Ganzes auswechselbar an dem Räumnadelchassis 11 befestigt ist.

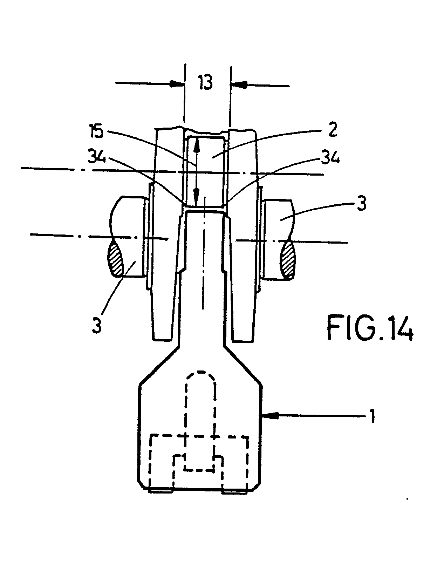

Der Schruppbereich ist in zwei in Richtung der Räumnadellängsachse 7 hintereinander liegende Teilbereiche A und B, nämlich in die der Trägerteile 9 und 10 unterteilt. Der erste Teilbereich A ist mit Schulterschneidplatten 12 für die Bearbeitung des Schulteraufmaßes 13 und der zweite Teilbereich B mit Stirnschneidplatten 14 für die Bearbeitung des Zapfenaufmaßes 15 bestückt (Fig. 14).

Die Schulterschneidplatten 12 sind jeweils zu zweit und zwei etwa rechtwinklig zur Räumnadellängsachse 7 nebeneinander angeordnet. Die Schulterschneidplatten 12 sind Wendeplatten, genauer gesagt Lochwendeplatten mit im wesentlichen quadratischen Deckflächen 16. Die zwischen zwei aneinander grenzenden Schneidkanten 17 bzw. 18 liegenden Schneidkörperecken der Schulterschneidplatten 12 von Teil A sind zu einer Schulter 19 abgefast. Die gerade Faskante 20 und die durch sie an die Schneidkörperecke angeformte, ebene Schulterfreifläche 21 stehen in gleichgroßen Winkeln 22 zu den benachbarten Schneidkanten 17 bzw. 18 und deren Freiflächen. Die jeweils im Schulterschnitt - bezogen auf die Vorschubrichtung 8 - stehende Aktiv-Schneidkante ist die Schneidkante 17, während die übrigen Schneidkanten 18 die Reserveschneiden bilden. Beim Angreifen der Räumnadel am Werkstück stehen nämlich die Schulterschneidplatten 12 noch in einem beachtlichen Abstand zu den Oberflächen der Zapfen 2,3 beispielsweise einer Kurbelwelle. Sie kommen daher nur im Bereich der - bezogen auf die Räumnadellängsachse 7 - außenliegenden Schneidkanten 17 in Werkstückkontakt.

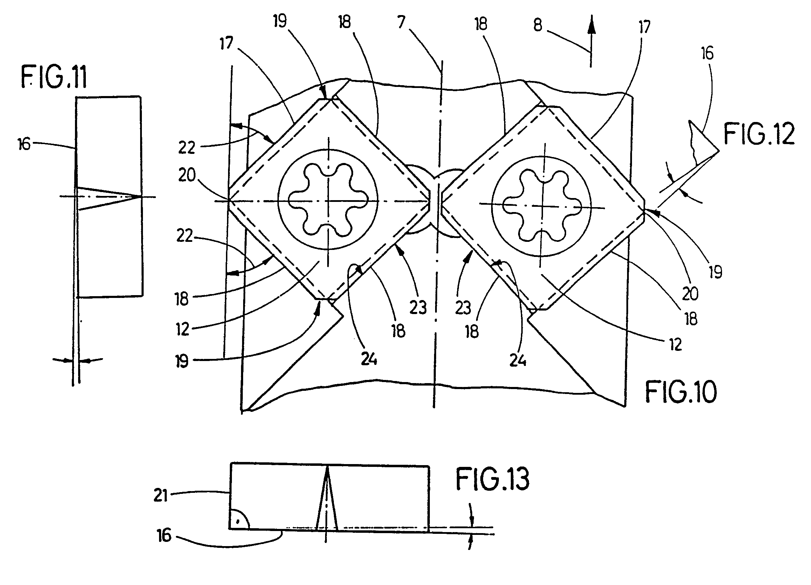

Die in einer Reihe nebeneinander angeordneten (Fig. 10) Schulterschneidplatten 12 liegen mit den Freiflächen 23 ihrer der Räumnadellängsachse 7 zugewandten Reserveschneiden 18 an aus dem Räumnadelchassis 11 oder aus ihrem Trägerteil 9 nach oben vorstehenden Stützflächen 24 an.

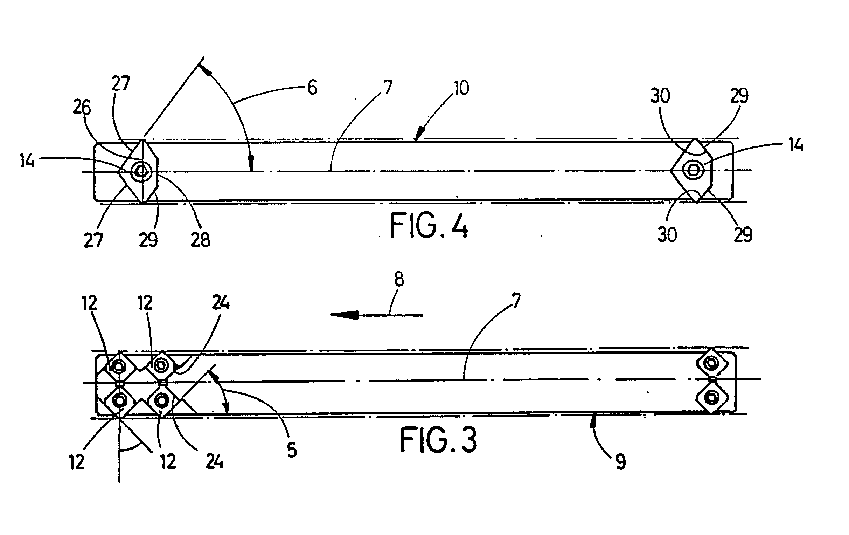

Die im Teil B angeordneten Stirnschneidplatten 14 erstrecken sich über die gesamte Räumnadelleistenbreite 25 und sind mit im wesentlichen rhombischen Deckflächen versehen (Fig. 4). Die längeren Deckflächendiagonalen 26 der rhombischen Deckflächen der Stirnschneidplatten 14 verlaufen rechtwinklig zur Räumnadellängsachse 7. Ihre Schneidkanten 27 stehen ebenfalls im Schleppschnitt. Sie bilden mit der Räumnadellängsachse 7 einen spitzen Winkel 6.

Die der Schnittrichtung 8 abgewandte Rhombusplattenecke 28 ist abgeschnitten. Dadurch wird in Richtung der Längsachse 7 Spankammervolumen hinzugewonnen bzw. eine geringere Beabstandung zwischen benachbarten Stirnschneidplatten 14 ermöglicht. Die Stirnschneidplatten 14 liegen mit ihren den Spanflächen der Schneidkanten 27 benachbarten, V-förmig zueinander stehenden Seitenflächen 29 an aus dem Räumnadelchassis 11 oder ihrem Trägerteil 10 nach oben vorstehenden Stützflächen 30 an. Dadurch ergibt sich eine V-förmige Zentrierung der Stirnschneidplatten 14 unter der Schnittdruckbeaufschlagung. Die Schneidkanten 27 weisen im Schnitt einen positiven Spanwinkel auf.

Der Schlichtbereich der Räumnadel ist durch deren Teile C und D gebildet. Es sind dies zwei in Räumnadellängsrichtung hintereinander angeordnete Teilbereiche, deren erster C mit ebenfalls Stirnschneidplatten 31 und deren zweiter D mit Seitenschneidplatten 32 und einer Stirnschneidplatte 33 bestückt ist. Die Stirnschneidplatten 31 in Teil C dienen zur Feinbearbeitung bzw. Finish der Zapfenoberfläche. Die Stirnschneidplatten 31 weisen im Schnitt einen Spanwinkel von 0° auf, sind jedoch unmittelbar hinter der Spanfläche mit einer Ausnehmung nach Art eines Hohlschliffes versehen, um dort nicht in Oberflächenkontakt mit den zu bearbeitenden Zapfenoberflächen zu gelangen. Die Stirnschneidplatten 31 weisen etwa die Umrißform und Lagerausbildung der Stirnschneidplatten 14 des Schruppbereiches (Teil B) auf.

Die Seitenschneidplatten 32 dienen zum Vorschruppen der Spurbreite und zum Voreinstich zweier seitlicher Freistechungen 34 der Lagerzapfen. An der letzten Zerspanungsstation in Teil D sind zwei Seitenschneidkörper 35 zum Kontrollschnitt und zur Kalibrierung der Spurbreite vorgesehen. Die Seitenschneidplatten 32 bzw. Seitenschneidkörper 35 sind Lochwendeplatten mit etwa quadratischen Deckflächen.

Den beiden Teilbereichen C und D ist jeweils ein einstückiges Trägerteil 36 bzw. 37 für die Schneidkörper 32, 33, 35 oder für separate Schneidkörperträger 38 zugeordnet. Jedes Trägerteil 36 bzw. 37 ist als Ganzes auswechselbar am Räumnadelchassis 11 befestigt. Durch die Anordnung der Schneidplatten 4, 12, 14, 31, 32, 33, 35 (in den Teilen A - D jeweils auf einem Trägerteil 9, 10 bzw. 36, 37) wird es ermöglicht, jede Schneidkörper- bzw. Schneidplattengruppe mit einem Arbeitsgang von der Räumnadel zu lösen und auszutauschen. Damit ist der Erfahrung Rechnung getragen, daß das Verschleißverhalten der einzelnen Schneidplatten bzw. Schneidkörper innerhalb der einzelnen Teile A - D jeweils etwa gleich groß, zwischen den einzelnen Teilen A - D jedoch unterschiedlich groß ist.

Die zur Endkalibrierung bestimmten Seitenschneidkörper 35 sind an auseinanderspreizbaren Schenkeln 39, 40 des Schneidkörperträgers 41 befestigt, der seinerseits am Trägerteil 37 befestigbar ist. Die Schenkel 39, 40 des Schneidkörperträgers 41 sind durch einen mittels Stellschraube 42 verstellbaren Keil 43 auseinanderspreizbar, wodurch das Kalibriermaß einstellbar ist.

Der zur Endkalibrierung bestimmte Teil D mit dem Trägerteil 37 ermöglicht eine Feineinstellung dadurch, daß das Trägerteil 37 auf einer schiefen Ebene 44 innerhalb des Räumnadelchassis 11 verschiebbar und in jeder Verschiebestellung feststellbar ist. Dadurch kann das Zustellmaß der diesem Teil insgesamt zugeordneten Schneidplatten bzw. Schneidkörper gemeinsam verändert werden.

Es ist zweckmäßig, wenn im Bereich der Teile C und D mit einem verminderten Räumnadelvorschub (Pfeilrichtung 8) gearbeitet wird.

In dem Ausführungsbeispiel sind die zur Feinbearbeitung bestimmten Stirnschneidplatten 31, 33 immer als im wesentlichen rhombisch mit im Schleppschnitt stehenden Schneidkanten dargestellt. Es ist jedoch auch denkbar, deren Stirnschneiden - wie bei Räumnadeln an sich bekannt - rechtwinklig zur Räumnadellängsachse 7 auszurichten.

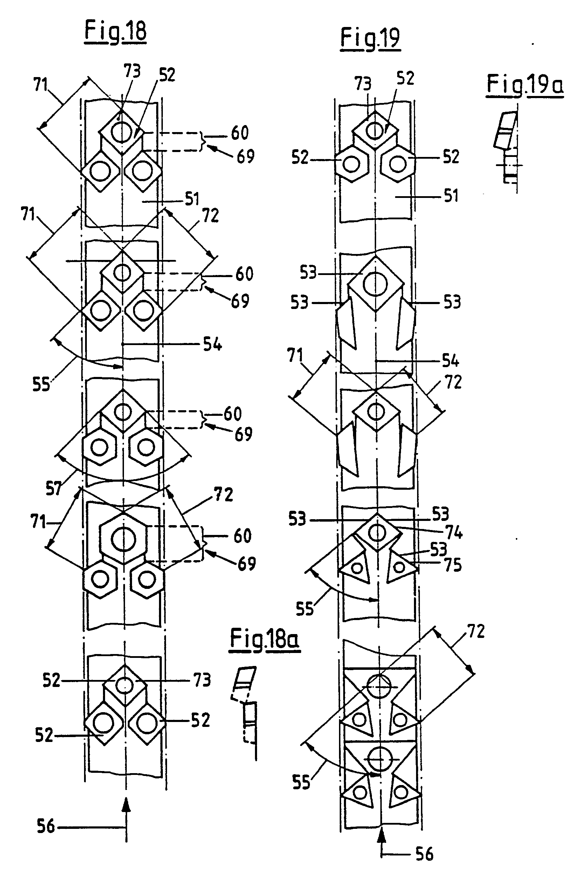

Die Räumnadel 51 ist auf ihren Spanflächenseiten (Fig. 18 - 22) mit Schneidkörpern 52 aus einem harten Schneidwerkstoff bestückt. Die Räumnadelschneiden 53 bilden zum Schleppschnitt mit der Räumnadellängsachse 54 einen spitzen Winkel 55. Zwei zueinander benachbarte Schneiden 53 bilden einen sich in Vorschubrichtung 56 öffnenden Bugwinkel 57, der doppelt so groß ist wie der spitze Winkel 55.

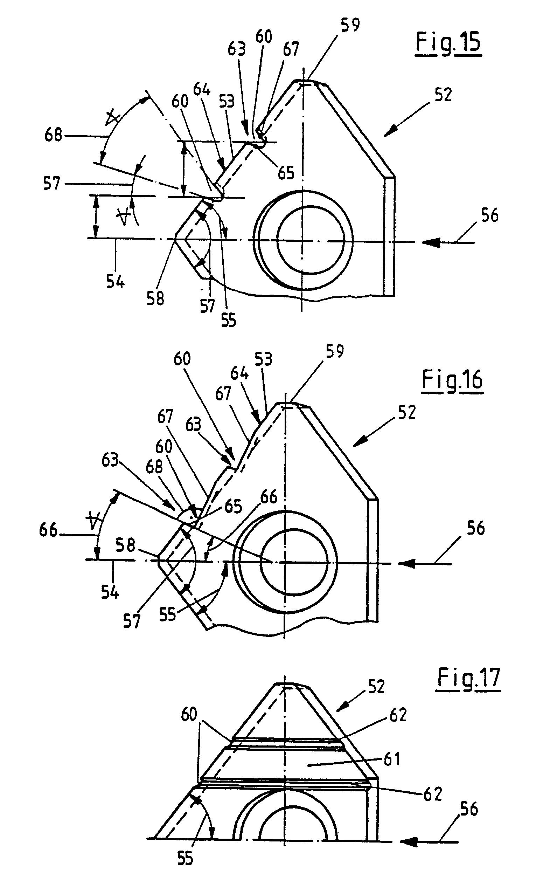

Die Schneiden 53 sind zwischen ihrem inneren Ende 58 und äußeren Ende 59 unterbrochen. Es sind mehrere Unterbrechungen 60 je Schneide 53 vorhanden. Die Unterbrechungen 60 können durch Ausnehmungen 62 in der jeweiligen Schneidkörperspanfläche 61 (Fig. 17) gebildet sein. Eine Alternative (Fig. 15 und 16) sieht vor, daß die Unterbrechungen 60 durch Freiflächenausnehmungen 63 in den Schneidkörperfreiflächen 64 gebildet sind. Die Ausnehmungen 62, 64 können einen V-förmigen Querschnitt aufweisen. Eine Alternative sieht vor, daß die Ausnehmungen die Querschnittsform eines U aufweisen, wobei die U-Schenkel auch in Richtung auf die Schenkelenden divergieren können (Fig. 15, 17).

Die Freiflächenausnehmungen 63 sind zweckmäßig so ausgebildet, daß ihre der Räumnadel-Mittellängsachse 54 zugewandten Flanken 65 mit der durch die Mittellängsachse gelegten, in Vorschub- bzw. Schnittrichtung 56 verlaufenden Mittellängsebene einen spitzen, sich in Vorschubrichtung 56 öffnenden Winkel 66 bilden. Die Mittellängsebene verläuft dabei lotrecht zur Zeichnungsebene von Fig. 15 - 19 und 20 - 22.

Die der Mittellängsachse 54 abgewandten Flanken 67 der Freiflächenausnehmungen 63 bilden Freiflächen von mit der Spanfläche gebildeten Nebenschneiden. Bei der Ausführungsform gemäß Fig. 16 beträgt der Spreizwinkel 68 zwischen den V-Schenkeln der Freiflächenausnehmungen 63 90°. Im Falle von Fig. 15 und 17 hingegen ist dieser Spreizwinkel 68 ein spitzer Winkel von weit weniger als 90°.

Bei den Ausführungsformen gemäß Fig. 18 - 25 sind die Unterbrechungen 60 durch Zwischenräume 69 zwischen einer Mehrzahl von in Vorschubrichtung 56 gestaffelt hintereinander geordneten Schneidkörpern 52 gebildet. Zur Bildung zweier sich nebeneinander über die Räumnadelbreite 70 erstreckender Schneiden 71, 72 ist eine ungerade Mehrzahl von Schneidkörpern 52 vorhanden, deren in Vorschubrichtung 56 vorderer Schneidkörper 73 mittig zur Mittellängsachse 54 steht. Der vordere Schneidkörper 73 ist symmetrisch zur Mittellängsachse 54 ausgebildet.

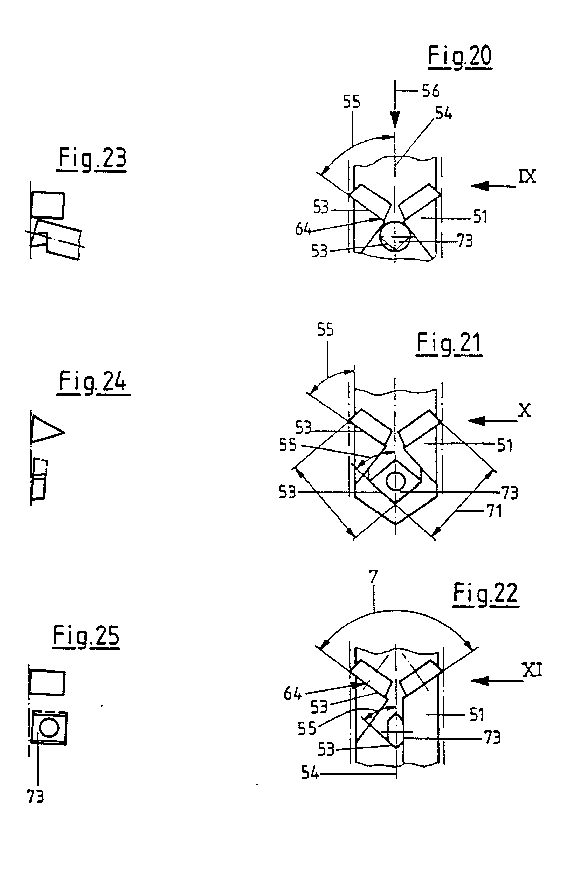

Bei der Ausführungsform gemäß Fig. 22 steht er mit seiner in Richtung der Mittellängsachse 54 verlaufenden Längserstreckung aufrecht im Schnitt. Die Schneidkörper 52, 73 sind Norm- oder Isoplatten oder aus solchen hergestellt, insbesondere geschliffen. Die auf einer Seite der Mittellängsachse angeordneten Schneidenabschnitte 74 bzw. 75 können auch in unterschiedlichen Winkeln 55 zur Mittellängsachse 54 stehen.

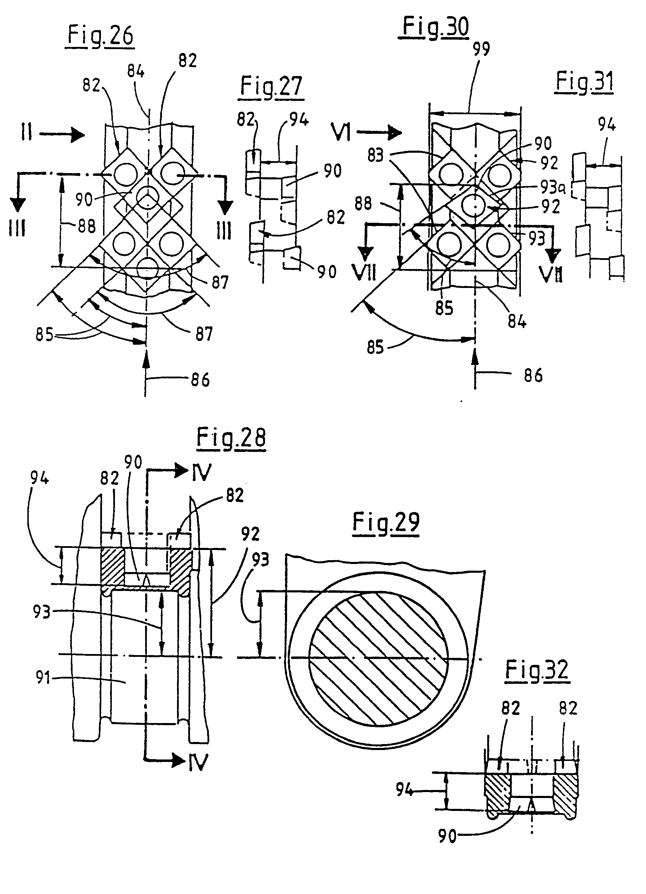

Die Räumnadel 81 ist auf ihren Freiflächenseiten (Fig. 26, 30, 33 ) mit Schneidkörpern 82 aus einem harten Schneidwerkstoff bestückt. Die Räumnadelschneiden 83 bilden zum Schleppschnitt mit der Räumnadellängsachse 84 einen spitzen Winkel 85. Zwei zueinander benachbarte Schneiden 83 bilden jeweils einen sich in Vorschubrichtung 86 schließenden Bugwinkel 87, der doppelt so groß ist wie der spitze Winkel 85. Jeweils drei Schneidkörper bilden eine Schneideinheit 88, deren Schneiden 83 über die gesamte Breite 89 der Räumnadel 81 wirksam sind. Der in Vorschubrichtung 86 vordere Schneidkörper (Vorstechschneider 90) steht mittig zur Mittellängsachse 84, während die weiteren Schneidkörper 82 zu zweit beidseitig gestaffelt - bezogen auf die Vorschubrichtung 86 - dahinterstehen. Der Vorstechschneider 90 steht dabei über die Freiflächen der anderen Schneidkörper 82 in Richtung auf das Werkstück 91 hinaus.

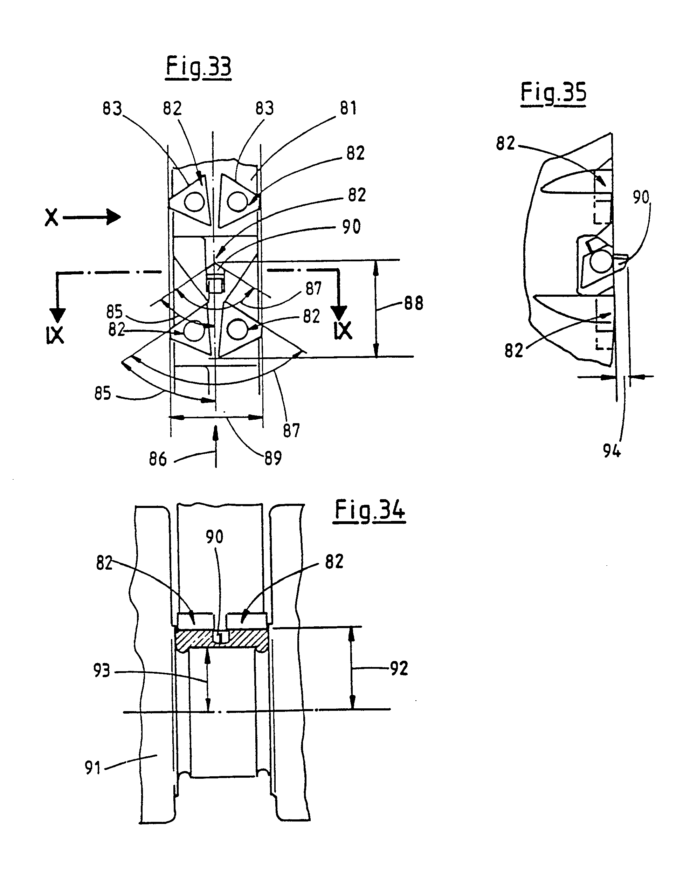

Die dem Vorstechschneider 90 folgenden Schneidkörper 82 einer Schneideinheit 88 stehen symmetrisch zur Mittellängsachse. Der Vorstechschneider 90 ist ebenfalls symmetrisch zur Mittellängsachse 84 ausgebildet. Der Vorstechschneider 90 kann aufrecht im Schnitt stehen (Fig. 33 - 35). Die Schneidkörper 82 einschließlich des Vorstechschneiders 90 (Fig. 26 - 32) können Norm- oder Isoplatten sein oder aus solchen hergestellt, insbesondere geschliffen sein. Die auf einer Seite der Räumnadellängsachse 84 angeordneten Schneiden 83 können unterschiedliche Winkel 85 mit der Räumnadellängsachse 84 bilden. Mindestens einer der Schneidkörper 82 bzw. Vorstechschneider 90 kann ein Wendeschneidkörper mit mehreren Schneiden 83 sein.

Der Vorstechschneidkörper 82 kann bei einer bevorzugten Ausführungsform mit seiner Schneide 83 um etwa die Differenz zwischen dem Schulteraufmaß 92 und dem Zapfenaufmaß 93 des Werkstückes 91 über die folgenden Schneidkörper 82 hinausstehen.

Durch die erfindungsgemäße Ausbildung erfolgt bereits im Anschnittbereich eine Schrupp-Bearbeitung auch des Zapfenaufmaßes 93.

Die Räumnadel 101 ist mit mehreren in Räumnadellängsrichtung verteilt angeordneten, sich über die gesamte Räumnadelbreite erstreckenden Schneidkörpern 102 aus einem harten Schneidwerkstoff versehen. Die Schneidkörper 102 weisen symmetrisch zur Räumnadellängsachse 104 stehende Schneiden 103 auf. Die beiden Schneiden 103 eines jeden Schneidkörpers bilden zum Schleppschnitt mit der Räumnadellängsachse 104 einen spitzen Winkel 105 und stehen zueinander in einem sich in Räumnadel-Vorschubrichtung 106 schließenden Bugwinkel 107. In Räumnadel-Vorschubrichtung 106 vor den beiderseits der Mittellängsachse 104 angeordneten Spanflächen 108 des Schneidkörpers 102 ist jeweils eine Spanablaufkammer 109 am Räumnadelkörper 110 angeordnet. Beide Spanablaufkammern 109 sind durch einen in Richtung der Räumnadellängsachse 104 verlaufenden Grat 111 voneinander getrennt. Der Grat 111 ist durch den Kopf eines in die Räumnadel 101 eingesetzten Trennkörpers 112 aus einem verschleißfesten Werkstoff, insbesondere aus Hartmetall gebildet. Der Grat 111 bildet eine geradlinige Schneide mit den Schneidenflanken 113. Die Schneide ist symmetrisch.

Der Grat 111 steigt in Räumnadel-Vorschubrichtung 106 derart an, daß er mit der Freifläche 114 des Schneidkörpers 102 einen spitzen, sich in Vorschubrichtung 106 schließenden Winkel 115 bildet. Der Grat 111 setzt sich am unteren, schneidkantenabseitigen Ende der bugartigen Stoßkante 116 zwischen den Schneidkörperspanflächen 108 beginnend in Räumnadel-Vorschubrichtung 106 fort. Die bugartige Stoßkante 116 des Schneidkörpers 102 zwischen den Spanflächen 108 ist gebrochen.

Der Trennkörper 112 ist außerhalb der Schneide bzw. den Schneidenflanken 113 mit einem Zylinderschaft 117 versehen und mit diesem in einer entsprechend gestalteten Ausnehmung 122 des Räumnadelkörpers 110 gehaltert.

Der Trennkörper 112 ist im Bereich seines Zylinderschaftes 117 mit einer ebenen, zum Grat 111 und zur Zylinderachse 123 parallelen Abflachung 118 versehen, welche von dem im wesentlichen ebenen Stirnende des Kopfes 119 einer von der Seite in den Räumnadelkörper 110 eingeschraubten Druckschraube 120 beaufschlagt ist. Der Zylinderschaft 117 des Trennkörpers ist mit einem Absatz 121 am dem Grat 111 abgewandten Ende der Abflachung 118 im Überdeckungsbereich der Druckschraubenbohrung versehen. Dadurch kann nach dem Ausschrauben der Druckschraube 120 leicht mit einem Schraubenzieher o.dgl. der Trennkörper 112 aus der Ausnehmung 122 hinausgestoßen werden. Die geteilten Späne sind mit 124 bezeichnet.

## Patentansprüche

1. Für die Oberflächenbearbeitung von hierzu in eine drehende Bewegung versetzten vorgegossenen oder vorgeschmiedeten Rundzapfen an Werkstücken, insbesondere an Kurbelwellen, bestimmte Räumnadel (1), deren - bezogen auf ihre Vorschubrichtung (8) - in einem vorderen Schruppbereich (A, B) und in einem hinteren Schlichtbereich (C, D) angeordnete Schneiden Teile von auswechselbar befestigten Schneidkörpern (4) aus einem harten Schneidwerkstoff sind und mindestens im Schruppbereich (A, B) der Räumnadel zum Schleppschnitt mit der Räumnadellängsachse (7) einen spitzen Winkel (5, 6) bilden, *dadurch gekennzeichnet*, daß der Schruppbereich

- einen vorderen, ersten Teilbereich (A) mit Schulterschneidplatten (12) für die Bearbeitung des Schulteraufmaßes (13) und
- einen hinteren, zweiten Teilbereich (B) mit Stirnschneidplatten (14) für die Bearbeitung des Zapfenaufmaßes (15) des Rundzapfens (2) enthält und

daß der Schlichtbereich

- einen vorderen, ersten, mit Stirnschneidplatten (31) für die Bearbeitung des Zapfenendmaßes bestückten Teilbereich (C) sowie
- einen hinteren, zweiten mit Seitenschneidplatten (32, 35) und Stirnschneidplatten (33) bestückten Teilbereich (D) für das Vorschruppen der Spurbreite zum Voreinstich zweier seitlicher Freistechungen (34) sowie abschließend zum Kontrollschnitt und zur Kalibrierung der Spurbreite enthält.

2. Räumnadel nach Anspruch 1, *dadurch gekennzeichnet*, daß die Schneidkörper auf mehreren Trägerteilen (9, 10, 36, 37) befestigt sind, die als Ganzes auswechselbar an dem Räumnadelchassis (11) befestigt sind.

3. Räumnadel nach Anspruch 1, *dadurch gekennzeichnet*, daß die Schneiden der Schneidkörper (4) mindestens im Schruppbereich (A, B) der Räumnadel (1) zum Schleppschnitt mit der Räumnadellängsachse (7) einen spitzen Winkel (5, 6) zwischen 30° und 60° bilden.

4. Räumnadel nach einem der Ansprüche 1 bis 3, *dadurch gekennzeichnet*, daß die Schulterschneidplatten (12) jeweils zu zweit und zweit etwa rechtwinklig zur Räumnadellängsachse (7) nebeneinander angeordnet sind.

5. Räumnadel nach Anspruch 4, *dadurch gekennzeichnet*, daß die Schulterschneidplatten (12) Wendeplatten sind.

6. Räumnadel nach Anspruch 5, *dadurch gekennzeichnet*, daß die Wendeplatten Lochwendeplatten sind.

7. Räumnadel nach Anspruch 5 oder 6, *dadurch gekennzeichnet*, daß die Wendeplatten mit jeweils im wesentlichen quadratischen Deckflächen (16) versehen sind.

8. Räumnadel nach Anspruch 7, *dadurch gekennzeichnet*, daß die zwischen zwei aneinandergrenzenden Schneidkanten (17, 18) liegenden Schneidkörperecken zu einer Schulter (19) abgefast sind.

9. Räumnadel nach Anspruch 8, *dadurch gekennzeichnet*, daß die gerade Faskante (20) und die durch sie an die Schneidkörperecke angeformte ebene Schulterfreifläche (21) mit gleich großen Winkeln (22) zu den benachbarten Schneidkanten (17, 18) und deren Freiflächen stehen.

10. Räumnadel nach mindestens einem der Ansprüche 4 bis 9, *dadurch gekennzeichnet*, daß die in einer Reihe nebeneinander angeordneten Schulterschneidplatten (12) mit den Freiflächen ihrer Räumnadellängsachse (7) zugewandten Reserveschneiden (18) an aus dem Räumnadelchassis (11) oder aus ihrem Trägerteil (9) nach oben vorstehenden Stützflächen (24) anliegen.

11. Räumnadel nach Anspruch 1, *dadurch gekennzeichnet*, daß die Stirnschneidplatten (14, 31) sich über die gesamte Nadelleistenbreite (25) erstrecken und mit im wesentlichen rhombischen Deckflächen versehen sind, wobei die längeren Deckflächendiagonalen (26) rechtwinklig zur Längsrichtung der Räumnadel verlaufen.

12. Räumnadel nach Anspruch 11, *dadurch gekennzeichnet*, daß die entgegen der Schnittrichtung (8) stehende Rhombusplattenecke (28) abgeschnitten ist.

13. Räumnadel nach Anspruch 11 oder 12, *dadurch gekennzeichnet*, daß die Stirnschneidplatten (14) mit ihren entgegen der Schnittrichtung (8) V-förmig zueinander stehenden Seitenflächen (29) an aus dem Räumnadelchassis (11) oder ihrem Trägerteil (10) nach oben vorstehen den Stützflächen anliegen.

14. Räumnadel nach einem der Ansprüche 1 bis 13, *dadurch gekennzeichnet*, daß die Schneidkanten (27) der Stirnschneidplatten (14) des hinteren, zweiten Teilbereiches (B) des Schruppbereiches einen positiven Spanwinkel aufweisen.

15. Räumnadel nach Anspruch 1 bis 13, *dadurch gekennzeichnet*, daß die Stirnschneidplatten (31) des Schlichtbereiches im Schnitt einen Spanwinkel von 0° aufweisen und ihre Spanfläche mit einer Ausnehmung nach Art eines Hohlschliffs versehen ist.

16. Räumnadel nach Anspruch 15, *dadurch gekennzeichnet*, daß die Stirnschneidplatten (31) mit etwa der Umrißform und der Lagerausbildung der Stirnschneidplatten (14) des Schruppbereiches (Teil B) übereinstimmen und daß der Schlichtbereich

- einen vorderen ersten mit Stirnschneidplatten (31) für die Bearbeitung des Zapfenendmaßes bestückten Teilbereich (C)
- sowie einen hinteren zweiten mit Seitenschneidplatten (32, 35) und Stirnschneidplatten (33) bestückten Teilbereich (D) für das Vorschruppen der Spurbreite, zum Voreinstich zweier seitlicher Freistechungen (34) sowie abschließend zum Kontrollschnitt und zur Kalibrierung der Spurbreite enthält.

17. Räumnadel nach Anspruch 1, *dadurch gekennzeichnet*, daß die Seitenschneidplatten (32, 35) Lochwendeplatten sind.

18. Räumnadel nach Anspruch 1, *dadurch gekennzeichnet*, daß die zur Endkalibrierung bestimmten Seitenschneidkörper (35) an auseinanderspreizbaren Schenkeln (39, 40) eines Schneidkörperträgers (41) fixiert sind.

19. Räumnadel nach Anspruch 18, *dadurch gekennzeichnet*, daß die Schenkel (39, 40) des Schneidkörperträgers (41) für die zur Endkalibrierung bestimmten Seitenschneidkörper (35) durch einen mittels Stellschraube (42) verstellbaren Keil spreizbar sind.

20. Räumnadel nach Anspruch 1, *dadurch gekennzeichnet*, daß die Schneiden (53, 73) der Stirnschneidplatten (52) zwischen ihrem inneren (58) und äußeren Ende (59) unterbrochen sind.

21. Räumnadel nach Anspruch 20, *dadurch gekennzeichnet*, daß mehrere Unterbrechungen (60) je Schneide (53) vorhanden sind.

22. Räumnadel nach Anspruch 20 oder 21, *dadurch gekennzeichnet*, daß die Unterbrechungen (60) durch Spanflächenausnehmungen (62) in der jeweiligen Schneidkörperspanfläche (Fig. 17) gebildet sind.

23. Räumnadel nach Anspruch 20, *dadurch gekennzeichnet*, daß die Unterbrechungen (60) durch Freiflächenausnehmungen (63) in den Schneidkörperfreiflächen (64) gebildet sind.

24. Räumnadel nach Anspruch 22 oder 23, *dadurch gekennzeichnet*, daß die Ausnehmungen (62) einen V-förmigen Querschnitt aufweisen.

25. Räumnadel nach Anspruch 22 oder 23, *dadurch gekennzeichnet*, daß die Ausnehmungen (62) die Querschnittsform eines U aufweisen.

26. Räumnadel nach Anspruch 25, *dadurch gekennzeichnet*, daß die U-Schenkel in Richtung auf die Schenkelenden divergieren.

27. Räumnadel nach Anspruch 23, *dadurch gekennzeichnet*, daß die der Mittellängsachse (54) zugewandten Flanken (65) der Freiflächenausnehmungen (63) mit der durch die Mittellängsachse (54) gelegten, in Vorschubrichtung (56) verlaufenden Mittellängsebene einen spitzen, sich in Vorschubrichtung (56) öffnenden Winkel (66) bilden.

28. Räumnadel nach Anspruch 27, *dadurch gekennzeichnet*, daß die der Mittellängsachse (54) abgewandten Flanken (67) der Freiflächenausnehmungen (63) Freiflächen von mit der Spanfläche gebildeten Nebenschneiden bilden.

29. Räumnadel nach Anspruch 20, *dadurch gekennzeichnet*, daß die Unterbrechungen (60) durch Zwischenräume (69) zwischen einer Mehrzahl von in Vorschubrichtung (56) gestaffelt hintereinander angeordneten Schneidkörpern (52) gebildet sind.

30. Räumnadel nach Anspruch 29, *dadurch gekennzeichnet*, daß zur Bildung zweier sich nebeneinander über die Räumnadelbreite erstreckender Schneiden eine ungerade Mehrzahl von Schneidkörpern (52) vorhanden ist, deren in Vorschubrichtung (56) vorderer mittig zur Mittellängsachse (54) steht.

31. Räumnadel nach Anspruch 30, *dadurch gekennzeichnet*, daß der vordere Schneidkörper (73) symmetrisch zur Mittellängsachse (54) ausgebildet ist.

32. Räumnadel nach Anspruch 30 oder 31, *dadurch gekennzeichnet*, daß der vordere Schneidkörper (73) mit seiner Längserstreckung aufrecht im Schnitt steht.

33. Räumnadel nach einem der Ansprüche 29 bis 32, *dadurch gekennzeichnet*, daß die Schneidkörper Norm- oder Isoplatten sind oder aus solchen hergestellt, insbesondere geschliffen sind.

34. Räumnadel nach einem der Ansprüche 29 bis 33, *dadurch gekennzeichnet*, daß die auf einer Seite der Räumnadellängsachse (54) angeordneten Schneidenabschnitte (74, 75) unterschiedliche Winkel (55) mit der Räumnadellängsachse (54) bilden.

35. Räumnadel nach einem der Ansprüche 29 bis 34, *dadurch gekennzeichnet*, daß jede aus mehreren durch die unterbrechungsbildenden Zwischenräume (69) voneinander distanzierten Schneidkörpern gebildete Schneideinheit (88) eine ungerade Anzahl von Schneidkörpern (82) enthält, deren in Vorschubrichtung (86) vorderer, einen Vorstechschneider (90) bildender Schneidkörper mittig zur Mittellängsachse (84) steht und deren weitere Schneidkörper (82) jeweils zu zweit und zweit bezogen auf die Vorschubrichtung (86) gestaffelt hintereinander stehen, wobei der Vorstechschneider (90) über die Freiflächen der anderen Schneidkörper (82) in Richtung auf das Werkstück (91) hinaussteht.

36. Räumnadel nach Anspruch 35, *dadurch gekennzeichnet*, daß die dem Vorstechschneider (90) folgenden Schneidkörper (82) einer Schneideinheit (88) symmetrisch zur Mittellängsachse (84) stehen.

37. Räumnadel nach Anspruch 35 oder 36, *dadurch gekennzeichnet*, daß der Vorstechschneider (90) symmetrisch zur Mittellängsachse (84) ausgebildet ist.

38. Räumnadel nach einem der Ansprüche 35 bis 37, *dadurch gekennzeichnet*, daß der Vorstechschneider (90) mit seiner Längserstreckung aufrecht im Schnitt steht.

39. Räumnadel nach einem der Ansprüche 35 bis 38, *dadurch gekennzeichnet*, daß die Schneidkörper (82, 90) Norm- oder Isoplatten sind oder aus solchen hergestellt, insbesondere geschliffen sind.

40. Räumnadel nach einem der Ansprüche 35 bis 39, *dadurch gekennzeichnet*, daß die auf einer Seite der Räumnadellängsachse (84) angeordneten Schneiden (93a) von Schneidkörpern (82, 90) unterschiedliche Winkel (85) mit der Räumnadellängsachse (84) bilden.

41. Räumnadel nach einem oder mehreren der vorhergehenden Ansprüche, *dadurch gekennzeichnet*, daß mindestens einer der Schneidkörpern (82, 90) ein Wendeschneidkörper mit mehreren Schneiden ist.

42. Räumnadel nach Anspruch 35, *dadurch gekennzeichnet*, daß der Vorstechschneider (90) mit seinen Schneiden (83) um etwa die Differenz (94) zwischen dem Schulteraufmaß (92) und dem Zapfenaufmaß (93) des Werkstücks (91) über die Freiflächen der folgenden Schneidkörper (90) in Richtung auf das Werkstück (91) hinaussteht.

43. Räumnadel nach einem oder mehreren der vorhergehenden Ansprüche, *dadurch gekennzeichnet*,

- daß in Räumnadel-Vorschubrichtung (106) vor den beiderseits der Mittellängsachse (104) angeordneten Spanflächen (108) des Schneidkörpers (102) jeweils eine Spanablaufkammer (109) am Räumnadelkörper (110) angeordnet ist,
- daß beide Spanablaufkammern (109) durch einen in Richtung der Räumnadellängsachse (104) verlaufenden Grat (111) voneinander getrennt sind und
- daß der Grat (111) durch den Kopf eines in die Räumnadel (101) eingesetzten Trennkörpers (112) aus einem verschleißfesten Werkstoff, insbesondere aus Hartmetall, gebildet ist.

44. Räumnadel nach Anspruch 43, *dadurch gekennzeichnet*, daß der Grat (111) durch eine geradlinige Schneide gebildet ist.

45. Räumnadel nach Anspruch 44, *dadurch gekennzeichnet*, daß die Schneide symmetrisch ist.

46. Räumnadel nach einem oder mehreren der vorhergehenden Ansprüche, *dadurch gekennzeichnet*, daß der Grat (111) in Räumnadel-Vorschubrichtung (106) ansteigt derart, daß er mit der Freifläche (114) des Schneidkörpers (102) einen spitzen, sich in Vorschubrichtung (106) schließenden Winkel (115) bildet.

47. Räumnadel nach Anspruch 46, *dadurch gekennzeichnet*, daß der Grat (111) am unteren, schneidkantenabseitigen Ende der bugartigen Stoßkante (116) zwischen den Schneidkörperspanflächen (108) beginnend sich in Räumnadelvorschubrichtung (106) fortsetzt.

48. Räumnadel nach Anspruch 47, *dadurch gekennzeichnet*, daß die bugartige Stoßkante (116) zwischen den Schneidkörperspanflächen (108) durch eine Fase gebrochen ist.

49. Räumnadel nach einem oder mehreren der vorhergehenden Ansprüche, *dadurch gekennzeichnet*, daß der Trennkörper (112) außerhalb seiner Gratflanken (113) mit einem Zylinderschaft (117) versehen und mit seinem Zylinderschaft (117) in einer entsprechend gestalteten Ausnehmung (122) des Räumnadelkörpers (110) gehaltert ist.

50. Räumnadel nach Anspruch 49, *dadurch gekennzeichnet*, daß der Trennkörper (112) im Bereich des Zylinderschaftes (117) mit einer ebenen, zum Grat (111) und zur Zylinderachse (123) parallelen Abflachung (118) versehen ist und daß die Abflachung (118) von dem im wesentlichen ebenen Stirnende des Kopfes (119) einer von der Seite in den Räumnadelkörper (110) eingeschraubten Druckschraube (120) beaufschlagt ist.

51. Räumnadel nach Anspruch 50, *gekennzeichnet durch*, eine Ausnehmung (121) am Trennkörperschaft (117) am dem Grat (111) abgewandten Ende der Abflachung (118) sowie im Überdeckungsbereich der Druckschraubenbohrung.

**Claims**

1. A cutter bar (1) intended for the surface machining of precast or rough-forged round pins on work pieces in particular on crank shafts caused to rotate for this purpose, the cutting parts of which cutter bar are exchangeably mounted cutters (4) made of a hard cutting material arranged - with reference to the cutter bar advancing direction (8) - in a front rough-machining zone (A, B) and a rear finishing zone (C, D) and which form, at least in the rough-machining zone (A, B) of the cutter bar, an acute angle (5, 6) with the longitudinal cutter bar axis (7) for the draw cut, *characterized in that* the rough-machining zone (A, B) comprises

- a front first section (A) with shoulder-cutting plates (12) for machining the shoulder dimension (13) and
- a rear second section (B) with front cutting plates (14) for machining the pin dimension (15) of the round pin (2) and

in that the finishing zone comprises

- a front first section (C) provided with front cutting plates (31), for machining the end dimension of the pin as well as
- a rear second section (D) provided with side cutting plates (32, 35) and front cutting plates (33) for the preliminary rough-machining of the track width for the preliminary cutting of two lateral free cuts (34), as well as in conclusion, for the control cut and for the calibration of the track width.

2. A cutter bar according to claim 1, *characterized in that* the cutters are mounted on several carrier components (9. 10, 36, 37) exchangeably mounted as a whole on the cutter bar frame (11).

3. A cutter bar according to claim 1, *characterized in that* the cutting edges of the cutters (4) form, at least in the rough-machining zone (A, B) of the cutter bar (1), an acute angle (5, 6) between 30° and 60° with the longitudinal axis (7) of the cutter bar for the drew cut.

4. A cutter bar according to one of claims 1 to 3, *characterized in that* the shoulder cutting plates (12) are arranged next to each other in two pairs each, approximately at right angles to the longitudinal cutter bar axis (7),

5. A cutter bar according to claim 4, *characterized in that* the shoulder cutting plates (12) are reversible plates.

6. A cutter bar according to claim 5, *characterized in that* the reversible plates are perforated reversible plates.

7. A cutter bar according to claim 5 or 6, *characterized in that* the reversible plates are respectively provided with cover surfaces (16) which are substantially square.

8. A cutter bar according to claim 7, *characterized in that* the cutter corners lying between two adjoining cutting edges (17, 18) are chamfered to form a shoulder (19).

9. A cutter bar according to claim 8, *characterized in that* the straight chamfered edge (20) and the plane shoulder flank (21) formed on by it on the cutter corner form equal angles (22) with the adjoining cutting edges (17, 18) and their flanks.

10. A cutter bar according to at least one of claims 4 to 9, *characterized in that* the shoulder cutting plates (12) arranged in a row next to each other bear with the flanks of their reserve cutting edges (18) facing their longitudinal cutter bar axis (7) on bearing faces (24) projecting upwards from the cutter bar frame (11) or from their carrier component (9).

11. A cutter bar according to claim 1, *characterized in that* the front cutting plates (14, 31) extend over the whole width (25) of the cutter bar strip and are provided with cover faces which are substantially rhombic, the longer cover face diagonals (26) extending at right angles to the longitudinal direction of the cutter bar,

12. A cutter bar according to claim 11, *characterized in that* the rhombic plate corner (28) disposed against the cutting direction (8) is cut off.

13. A cutter bar according to claim 11 or 12, *characterized in that* the front cutting plates (14) bear with their side faces (29) placed together in a V-configuration against the cutting direction (8) on supporting faces projecting upwards out of the cutter bar frame (11) or its carrier component (10).

14. A cutter bar according to one of claims 1 to 13, *characterized in that* the cutting edges (27) of the front cutting plates (14) of the rear second section (B) of the rough-machining zone have a positive rake.

15. A cutter bar according to claim 1 to 13 *characterized in that* the front cutting plates (31) of the finishing zone have a rake of 0° in cutting, and their cutting face is provided with recessing in the manner of concave grinding.

16. A cutter bar according to claim 15, *characterized in that* the front cutting plates (31) approximately conform to the contour and the support design of the front cutting plates (14) of the rough-machining zone (section B) and that the finishing zone comprises

- a front first section C provided with front cutting plates (31) for the machining of the final pin dimension
- as well as a rear second section (D) provided with side cutting plates (32, 35) and front cutting plates (33) for the preliminary rough-machining of the track width, for the preliminary cutting of two lateral free cuts (34) and in conclusion, for the control cut and for the calibration of the track width.

17. A cutter bar according to claim 1. *characterized in that* the side cutting plates (32, 35) are reversible perforated plates.

18. A cutter bar according to claim 1 *characterized in that* the side cutters (35) intended for the final calibration are mounted on arms (39, 40) which can be spread apart of a cutter carrier (41).

19. A cutter bar according to claim 18, *characterized in that* the arms (39, 40) of the cutter carrier (41) for the side cutters (35) intended for the final calibration can be spread apart by a wedge that is adjustable by means of an adjusting screw (42).

20. A cutter bar according to claim 1, *charac-*

terized in that the cutting edges (53, 73) of the front cutting plates (52) are interrupted between their inner end (58) and outer end (59).

21. A cutter bar according to claim 20, characterized in that several breaks (60) are provided per cutting edge (53).

22. A cutter bar according to claim 20 or 21, characterized in that the breaks (60) are formed by recesses (62) in the cutting face of the respective cutter rake face (Figure 17),

23. A cutter bar according to claim 20, characterized in that the breaks 60 are formed by flank recesses (63) in the cutter flanks (64).

24. A cutter bar according to claim 22 or 23, characterized in that the recesses (62) have a V-shaped cross-section.

25. A cutter bar according to claim 22 or 23, characterized in that the recesses have a U-shaped cross-section,

26. A cutter bar according to claim 25, characterized in that the sides of the U diverge towards the side ends.

27. A cutter bar according to claim 23, characterized in that the sides (65) facing the median longitudinal axis (54) of the flank recesses (63) form an acute angle (66) opening out in the advancing direction (56) with the median longitudinal plane placed in the median longitudinal axis (54) extending in the advancing direction (56).

28. A cutter bar according to claim 27, characterized in that the sides (67) facing away from the median longitudinal axis (54) of the flank recesses (63) form the flanks of subsidiary cutting edges formed with the cutting face.

29. A cutter bar according to claim 20, characterized in that the breaks (60) are formed by gaps (69) between a plurality of cutters (52) arranged in a staggered manner one after the other in the advancing direction (56).

30. A cutter bar according to claim 29, characterized in that in order to form two cutting edges extending next to each other over the width of the cutter bar, there is provided a plurality of an uneven number of cutters (52) whereof the front one in the advancing direction (56) is disposed centrally with respect to the median longitudinal axis (54).

31. A cutter bar according to claim 30, characterized in that the front cutter (73) is designed symmetrically with respect to the median longitudinal axis (54).

32. A cutter bar according to claim 30 or 31, characterized in that in cutting the front cutter (73) stands upright with its longitudinal dimension,

33. A cutter bar according to one of claims 29 to 32, characterized in that the cutters are standard or ISO plates or made therefrom, being ground in particular.

34. A cutter bar according to one of claims 29 to 33, characterized in that the cutting sections (74, 75) arranged on one side of the longitudinal axis (54) of the cutter bar, form differing angles (55) with the longitudinal axis (54) of the cutter bar.

35. A cutter bar according to one of claims 29 to 34, characterized in that each cutter unit (88) formed from several cutters interspaced from each other by the gaps (69) forming the breaks, comprises an uneven number. of cutters (82), whose front cutter in the advancing direction (86) which forms a prepunching cutter (90), is disposed centrally with respect to the median longitudinal axis (84) and whose further cutters are disposed respectively in pairs, being staggered one after another with reference to the advancing direction (86), the prepunching cutter (90) projecting over the flanks of the other cutters (82) towards the work piece (91).

36. A cutter bar according to claim 35, characterized in that the cutters (82) of a cutter unit (88) following the prepunching cutter (90) are disposed symmetrically with respect to the median longitudinal axis (84).

37. A cutter bar according to claim 35 or 36, characterized in that the prepunching cutter (90) is designed symmetrically with respect to the median longitudinal axis (84).

38. A cutter bar according to one of claims 35 to 37, characterized in that in cutting, the prepunching cutter (90) stands upright in its longitudinal reach.

39. A cutter bar according to one of claims 35 to 38, characterized in that the cutters (82, 90) are standard or ISO plates or are made therefrom, being in particular ground.

40. A cutter bar according to one of claims 35 to 39 characterized in that the cutting edges (93a) arranged on one side of the cutter bar longitudinal axis (84) of the cutters (82, 90) form differing angles (85) with the longitudinal axis (84) of the cutter bar.

41. A cutter bar according to one or several of the preceding claims, characterized in that at least one of the cutters (82, 90) is a reversible cutter with several cutting edges.

42. A cutter bar according to claim 35, characterized in that the prepunching cutter (90) projects with its cutting edges (83) towards the workpiece (91) by approximately the difference (94)

between the shoulder dimension (92) and the radial pin dimension (93) of the workpiece (91) over the flanks of the following cutters (90).

43. A cutter bar according to one or several of the preceding claims, characterized in

- that there is arranged respectively one chip disposal chamber (109) on the cutter bar body (110) ahead of, in the cutter advancing direction (106), the cutting faces (108) of the cutter (102) which are arranged on both sides of the median longitudinal axis (104),
- that both chip disposal chambers (109) are separated from each other by a ridge (111) and
- that the ridge (111) is formed by the head of a separating member (112) inserted into the cutter bar (101), which head is formed from a wear-resistant material, in particular hardmetal.

44. A cutter bar according to claim 43, *characterized in that* the ridge (111) is formed by a straight cutting edge.

45. A cutter bar according to claim 44, *characterized in that* the cutting edge is symmetrical.

46. A cutter bar according to claim 45, *characterized in that* the ridge (111) rises in the cutter bar advancing direction (106) in such a way that it forms an acute angle (115) with the flank (114) of the cutter (102), which angle narrows in the advancing direction (106).

47. A cutter bar according to claim 46, *characterized in that* starting between the cutting edges (108) of the cutter, the ridge (111) continues at the lower end on the opposite side to the cutting edge of the bow-type impacting edge (116).

48. A cutter bar according to claim 47, *characterized in that* the bow-type impacting edge (116) is broken by a chamfer between the cutting faces (108) of the cutter.

49. A cutter bar according to one or several of the preceding claims, *characterized in that* the separating member (112) is provided with a cylindrical shaft (117) beyond its ridge sides (113), and that it is mounted with its cylindrical shaft (117) in a correspondingly formed recess (122) of the cutter bar body (110).

50. A cutter bar according to claim 49, *characterized in that* the separating member (112) is provided in the range of the cylindrical shaft (117) with a plane flattened portion (118) parallel to the ridge (111) and to the cylinder axis (123), and that the flattened portion (118) is acted on by the substantially plane front end of the head (119) of a clamping screw (120) screwed into the cutter bar body (110) from the side.

51. A cutter bar according to claim 50, *characterized by* a recess (121) on the stem (117) of the separating member at the end of the flattened portion (118) on the opposite side to the ridge (111) and in the overlap zone of the clamping screw bore.

**Revendications**

1. Outil de brochage ou broche (1) pour l'usinage de surfaces de tourillons ronds (ou de manetons ou éléments ronds semblables) disposés sur des pièces, en particulier sur des vilebrequins, les tourillons ayant été formés par coulée ou forgeage et étant animés d'un mouvement rotatif pour l'usinage de leurs surfaces, broche (1) dont les arêtes de coupe, disposées dans une zone antérieure d'ébauchage (A, B), considérée dans le sens de la direction d'avancement (8) de la broche (1), et dans une zone postérieure de finition (C, D), sont des parties de pièces de coupe (4) fixées de façon interchangeable, faites d'un matériau de coupe dur et renfermant, tout au moins dans la zone d'ébauchage (A, B) de la broche, en vue de la coupe traîante, un angle aigu (5, 6) avec l'axe longitudinal (7) de la broche, caractérisé en ce que la zone d'ébauchage comporte

- une première partie ou partie avant (A) garnie de plaquettes de coupe d'épaulement (12) pour l'usinage de la cote de départ d'épaulement (13) et
- une seconde partie ou partie arrière (B) garnie de plaquettes de coupe de face (14) pour l'usinage de la cote de départ (15) du tourillon rond (2) et en ce que la zone de finition comporte
- une première partie ou partie avant (C) garnie de plaquettes de coupe de face (31) pour l'usinage de la cote finale du tourillon, ainsi que
- une seconde partie ou partie arrière (D) garnie de plaquettes de coupe latérale (32, 35) et de plaquettes de coupe de face (33) pour l'ébauchage de la largeur de passage en vue du profilage en plongée de deux gorges latérales de dégagement (34), de même que, pour terminer, de la coupe de contrôle et pour le calibrage de la largeur de passage.

2. Broche selon la revendication 1, caractérisée en ce que les pièces de coupe sont fixées sur plusieurs supports (9, 10, 36, 37) qui sont fixés de façon interchangeable comme un ensemble sur le châssis (11) de la broche.

3. Broche selon la revendication 1, caractérisé en ce que les arêtes de coupe des pièces de coupe (4) forment un angle aigu (5, 6) compris entre 30° et 60° avec l'axe longitudinal (7) de la broche, tout au moins dans la zone d'ébauchage (A, B) de la broche (1), en vue de la coupe traînante.

4. Broche selon une des revendications 1 à 3, caractérisée en ce que les plaquettes de coupe d'épaulement (12) sont disposées deux par deux l'une à côté de l'autre, à peu près à angle droit par rapport à l'axe longitudinal (7) de la broche.

5. Broche selon la revendication 4, caractérisée en ce que les plaquettes de coupe d'épaulement (12) sont des plaquettes réversibles.

6. Broche selon la revendication 5, caractérisée en ce que les plaquettes réversibles sont des plaquettes réversibles percées.

7. Broche selon la revendication 5 ou 6, caractérisée en ce que les plaquettes réversibles présentent des grandes faces (16) qui sont essentiellement carrées.

8. Broche selon la revendication 7, caractérisée en ce que les angles de plaquette situés entre deux arêtes de coupe (17, 18) adjacentes sont coupés pour former un épaulement (19).

9. Broche selon la revendication 8, caractérisée en ce que le côté droit coupé (20) et la face en dépouille plane (21), formée par lui sur l'angle de plaquette, renferment des angles (22) de même grandeur avec les arêtes de coupe (17, 18) voisines et leurs faces en dépouille.

10. Broche selon au moins une des revendications 4 à 9, caractérisée en ce que les plaquettes de coupe d'épaulement (12), disposées les unes à côté des autres dans une rangée, sont appliquées contre des faces d'appui (24) faisant saillie vers le haut à partir du châssis (11) de la broche ou à partir du support (9) concerné, par les faces en dépouille de leurs arêtes de coupe (18) de réserve dirigées vers l'axe longitudinal (7) de la broche.

11. Broche selon la revendication 1, caractérisée en ce que les plaquettes de coupe de face (14, 31) s'étendent sur toute la largeur (25) de la partie travaillante de la broche et possèdent des grandes faces essentiellement rhombiques dont les grandes diagonales (26) sont perpendiculaires à la direction longitudinale de la broche.

12. Broche selon la revendication 11, caractérisée en ce que l'angle (28) de la plaquette en losange dirigé en sens contraire à la direction de coupe (8) est coupé.

13. Broche selon la revendication 11 ou 12, caractérisée en ce que les plaquettes de coupe de face (14) sont appliquées contre des faces d'appui faisant saillie vers le haut à partir du châssis (11) de la broche ou à partir du support (10) concerné, par leurs faces latérales (29) formant un V dirigé en sens contraire à la direction de coupe (8).

14. Broche selon une des revendications 1 à 13, caractérisée en ce que les arêtes de coupe (27) des plaquettes de coupe de face (14) de la seconde partie ou partie arrière (B) de la zone d'ébauchage ont un angle de coupe positif.

15. Broche selon les revendications 1 à 13, caractérisée en ce que les plaquettes de coupe de face (31) de la zone de finition présentent, en coupe, un angle de coupe de 0° et leur face de coupe est pourvue d'un évidement à la façon d'un meulage en creux.

16. Broche selon la revendication 15, caractérisée en ce que les plaquettes de coupe de face (31) de la zone de finition correspondent à peu près à la forme de contour et à la réalisation du montage des plaquettes de coupe de face (14) de la zone d'ébauchage (partie B) et que la zone de finition comporte

— une première partie ou partie avant (C) garnie de plaquettes de coupe de face (31) pour l'usinage de la cote finale du tourillon
— ainsi qu'une seconde partie ou partie arrière (D) garnie de plaquettes de coupe latérale (32, 35) et de plaquettes de coupe de face (33) pour l'ébauchage de la largeur de passage, en vue du profilage en plongée de deux gorges latérales de dégagement (34), de même que, pour terminer, de la coupe de contrôle et pour le calibrage de la largeur du passage.

17. Broche selon la revendication 1, caractérisée en ce que les plaquettes de coupe latérale (32, 35) sont des plaquettes réversibles percées.

18. Broche selon la revendication 1, caractérisée en ce que les pièces de coupe latérale (35), destinées au calibrage final, sont fixées à des branches (39, 40) pouvant être écartées mutuellement d'un porte-pièces de coupe (41).

19. Broche selon la revendication 18, caractérisée en ce que les branches (39, 40) du porte-pièces de coupe (41) pour les pièces de coupe latérale (35), destinées au calibrage final, peuvent être écartées par un coin déplaçable au moyen d'une vis de réglage (42).

20. Broche selon la revendication 1, caractérisée en ce que les arêtes de coupe (53, 73) des plaquettes de coupe de face (52) sont interrompues entre leur extrémité intérieure (58) et leur extrémité extérieure (59).

21. Broche selon la revendication 20, caractérisée en ce que chaque arête de coupe (53) présente plusieurs interruptions (60).

22. Broche selon la revendication 20 ou 21, caractérisée en ce que les interruptions (60) sont constituées par des évidements (62) dans la face en dépouille de la pièce de coupe concernée (figure 17).

23. Broche selon la revendication 20, caractérisée en ce que les interruptions (20) sont constituées par des évidements (63) dans les faces en dépouille (64) des pièces de coupe.

24. Broche selon la revendication 22 ou 23, caractérisée en ce que les évidements (62) ont une section droite en V.

25. Broche selon la revendication 22 ou 23, caractérisée en ce que les évidements (62) ont la forme d'un U en section droite.

26. Broche selon la revendication 25, caractérisée en ce que les branches du U divergent en direction des extrémités des branches.

27. Broche selon la revendication 23, caractérisée en ce que les flancs (65), dirigés vers l'axe longitudinal médian (54) des évidements (63) des faces en dépouille, forment un angle aigu (66), s'ouvrant dans la direction d'avancement (56), avec le plan longitudinal médian passant par l'axe longitudinal médian (54) et s'étendant dans la direction d'avancement (56).

28. Broche selon la revendication 27, caractérisée en ce que les flancs (67), éloignés de l'axe longitudinal médian (54) des évidements (63) des faces en dépouille, constituent des faces en dépouille d'arêtes de coupe secondaires formées avec la face de coupe.

29. Broche selon la revendication 20, caractérisée en ce que les interruptions (60) sont constituées par des intervalles (69) entre plusieurs pièces de coupe (52) disposées avec des décalages transversaux mutuels l'une derrière l'autre dans le sens de la direction d'avancement (56).

30. Broche selon la revendication 29, caractérisée en ce que, pour la formation de deux arêtes de coupe s'étendant l'une à côté de l'autre sur toute la largeur de la broche, on a prévu une pluralité impaire de pièces de coupe (52) dont celle située à l'avant, dans le sens de la direction d'avancement (56), est centrée sur l'axe longitudinal médian (54).

31. Broche selon la revendication 30, caractérisée en ce que la pièce de coupe (73) située à l'avant, est conformée symétriquement par rapport à l'axe longitudinal médian (54).

32. Broche selon la revendication 30 ou 31, caractérisée 30 en ce que la pièce de coupe (73) située à l'avant, est disposée verticalement, en coupe, par son étendue longitudinale.

33. Broche selon une des revendications 29 à 32, caractérisée en ce que les pièces de coupe sont des plaquettes normalisées ou des plaquette ISO ou sont réalisées à partir de telles plaquettes, notamment par meulage.

34. Broche selon une des revendications 29 à 33, caractérisée en ce que les segments de plaquette (74, 75) disposés d'un côté de l'axe longitudinal (54) de la broche, forment des angles (55) différents avec cet axe.

35. Broche selon une des revendications 29 à 34, caractérisée en ce que chaque unité de coupe (88), constituée de plusieurs pièces de coupe mutuellement espacées par les intervalles (69) constituant les interruptions, comporte un nombre impair de pièces de coupe (82), dont la pièce située à l'avant, formant un élément de coupe préliminaire, est centrée sur l'axe longitudinal médian (54) et dont les autres pièces (82) sont disposées deux par deux les unes derrière les autres, dans le sens de la direction d'avancement (86), en étant mutuellement décalées transversalement, l'élement de coupe préliminaire (90) faisant saillie, en direction de la pièce (91), audelà des faces en dépouille des autres pièces de coupe (82).

36. Broche selon la revendication 35, caractérisée en ce que les pièces de coupe (82) d'une unité de coupe (88) qui suivent l'élément de coupe préliminaire (90), sont disposées symétriquement par rapport à l'axe longitudinal médian (84).

37. Broche selon la revendication 35 ou 36, caractérisée en ce que l'élément de coupe préliminaire (90) est conformé symétriquement par rapport à l'axe longitudinal médian (84).

38. Broche selon une des revendications 35 à 37, caractérisée en ce que l'élément de coupe préliminaire (90) est disposé verticalement, en coupe, par son étendue longitudinale.

39. Broche selon une des revendications 35 à 38, caractérisée en ce que les pièces de coupe (82, 90) sont des plaquettes normalisées ou des plaquettes ISO, ou sont fabriquées à partir de telles plaquettes, notamment par meulage.

40. Broche selon une des revendications 35 à 39, caractérisée en ce que les arêtes de coupe (93a) disposées d'un côté de l'axe longitudinal (84) de la broche et faisant partie de pièces de coupe (82, 90), forment des angles (85) différents avec l'axe longitudinal (84) de la broche.

41. Broche selon une ou plusieurs des revendications précédentes, caractérisée en ce que l'une au moins des pièces de coupe (82, 90) est une pièce de coupe réversible présentant plusieurs arêtes de coupe.

42. Broche selon la revendication 35, caractérisée en ce que l'élément de coupe préliminaire (90) fait saillie, par ses arêtes de coupe (83), en direction de la pièce usinée (91), par rapport aux faces en dépouille des pièces de coupe (90) suivantes, d'une quantité correspondant à peu près à la différence (94) entre la cote de départ d'épaulement (92) et la cote de départ de tourillon (93) de la pièce (91).

43. Broche selon une ou plusieurs des revendications précédentes, caractérisée en ce que

— une chambre (109) d'écoulement de copeaux est ménagée sur le corps (110) de la broche devant chacune des faces de coupe (108) disposées de part et d'autre de l'axe longitudinal médian (104) de la pièce de coupe (102), dans le sens de la direction d'avancement (106) de la broche,
— les deux chambres (109) d'écoulement de copeaux sont séparées l'une de l'autre par une crête (111) s'étendant en direction de l'axe longitudinal (104) de la broche et
— la crête (11) est formée par la tête d'une pièce de séparation (112) insérée dans la broche (101) et faite d'un matériau qui résiste à l'usure, notamment de métal dur.

44. Broche selon la revendication 43, caractérisée en ce que la crête (111) est formée par un tranchant rectiligne.

45. Broche selon la revendication 44, caractérisée en ce que le tranchant est symétrique.

46. Broche selon une ou plusieurs des revendications précédentes, caractérisée en ce que la crête (111) monte dans la direction d'avancement (106) de la broche, de manière à former avec la face en dépouille (114) de la pièce de coupe (102) un angle aigu (115) qui se ferme dans la direction d'avancement (106).

47. Broche selon la revendication 46, caractérisée en ce que la crête (111) commence à l'extrémité inférieure, éloignée de l'arête de coupe, de l'arête de jonction (116) semblable à une étrave entre les faces de coupe (108) de la pièce de coupe, et se prolonge dans la direction d'avancement (106) de la broche.

48. Broche selon la revendication 47, caractérisée en ce que l'arête de jonction (116) en étrave entre les faces de coupe (108) est coupée par un chanfrein.

49. Broche selon une ou plusieurs des revendications précédentes, caractérisée en ce que la pièce de séparation (112) possède, en dehors des flancs (113) de sa crête, une tige cylindrique (117), par laquelle elle est maintenue dans un évidement (122) de forme correspondante du corps (110) de la broche.

50. Broche selon la revendication 49, caractérisée en ce que la pièce de séparation (112) présente, dans la région de sa tige cylindrique (117), un méplat (118) parallèle à la crête (111) et à l'axe (123) de la tige cylindrique et que la face essentiellement plane de l'extrémité libre (119) d'une vis de pression (120), laquelle est vissée latéralement dans le corps (110) de la broche, vient s'appliquer contre le méplat (118).

51. Broche selon la revendication 50, caractérisée par un évidement (121) ménagé sur la tige (117) de la pièce de séparation, à l'extrémité du méplat (18) éloignée de la crête (111), ainsi que dans la zone recouverte par le trou recevant la vis de pression.

FIG.1

FIG.2

Fig.2a

FIG.4

FIG.3

31

FIG.6

40  35

FIG.9

43

42

39  35

31  31  31

FIG.5

VI

32  38  32  38  32  38  33  35  41

FIG.8

32  32  32  33  IX  35  41

40

VIII  32  39  35

FIG.7

IX

FIG.11

16

FIG.12

17 19 18 7 18 8 17 16

22

20

22

18

12

19

23 23

24 24

18 18

19

20

18

12

FIG.10

FIG.13

21

16

11

FIG.14

Fig.15

Fig.16

Fig.17

Fig.18

Fig.19

Fig.19a

Fig.18a

Fig.23

Fig.24

Fig.25

Fig.20

Fig.21

Fig.22

Fig.26

Fig.27

Fig.30

Fig.31

Fig.28

Fig.29

Fig.32

## Fig.33

## Fig.35

## Fig.34

Fig.36

Fig.38

Fig.37

Fig.39